# EUROPEAN PATENT APPLICATION

(11) **EP 1 422 942 A1**
(43) Date of publication of application: **26.05.2004**
(21) Application number: 02751840.6
(22) Date of filing: 06.08.2002
(51) Int. Cl.: H04N 7/14, G06F 17/60, H04M 11/00

(54) **CHARGING SYSTEM**

(30) Priority: 10.08.2001 JP 2001244173
(71) Applicant: Nova Corporation, Osaka-shi, Osaka 542-0086 (JP)
(72) Inventor: SARUHASHI, Nozomu, c/o Nova Corporation, Osaka-shi, Osaka 542-0086 (JP); KUZUNISHI, Tetsuo, c/o Nova Corporation, Osaka-shi, Osaka 542-0086 (JP)
(74) Representative: Schubert, Siegmar, Dipl.-Ing.
(86) International application number: PCT/JP2002/008039
(87) International publication number: WO 2003/017663

(57) **Abstract**

User's devices 1, content provider's devices 2, and a payment server 3 are connected via lines. Each user's device comprises a videophone 11, a bill collector 12, and a terminal booth 13 for housing them. Each content provider's device 2 comprises a videophone 12 which is arranged to be bidirectionally connected to the user's videophone 11, and a PC 23 which indicates a location of the user's device 1, which transmits entered transaction information to the payment server 3, and which shows payment amount information sent from the payment server 3. Inside the terminal booth 13 of the user's device 1, a user receives a service from a provider and pays for the service by the bill collector 12 housed in the terminal booth 13.

## Description

### TECHNICAL FIELD

The present invention relates to a billing system to charge for a service when a user receives a service which is chosen from contents provided by at least one content provider.

Systems for getting images, sounds and other media data, and systems for purchasing books, admission tickets to various events, travel tickets and other items, have been constructed by way of networks which link personal computers (hereinafter mentioned as PC) and the Internet or the like.

Generally, these service provision systems via the Internet or the like charge a bill to a bank account, a credit account, etc. of a user who received a service. For such payment, the user gives his/her credit card number, bank account number or other ID to a service provider (a content provider). The content provider debits the amount, based on the credit card number or the like.

However, this billing system requires a user to notify and/or register his credit card number or the like to the content provider, which is manually done with a PC keyboard or the like and thus is a bothering process. Besides, some users are discouraged from getting a service when they feel anxious about notifying and/or registering their personal information such as a credit card number to the content provider (e.g. due to a risk of personal information leakage). Further, the current PC-based systems cannot accept cash payment.

In addition to these problems about billing, the service provision systems via the Internet or the like face other problems. For one, these systems exclude those who do not own a PC ("the Have Nots") or those who cannot operate a PC (keyboard, etc.) ("PC illiterates") from such services, thus limiting their users to particular people. For another, these systems are available only in a house or an office which is equipped with a PC. For example, while a user is away from that environment (e.g. at the station), it is impossible to access a service unless he/she carries a personal digital assistant (PDA) such as a mobile computer.

The present invention is made to solve the above problems. An object of the invention is to provide a billing system which allows even the Have Nots and PC illiterates to have an easy access to services provided by a content provider, and which enables easy and secure payment.

### DISCLOSURE OF THE INVENTION

A billing system of the present invention is to charge for a service when a user receives a service which is chosen from contents provided by at least one content provider, wherein the billing system comprises at least one user's device, at least one content provider's device, and a payment server. The user's device comprises: a videophone whose screen presents icons for choosing one of the contents; a bill collector which receives transaction information transmitted from the payment server via a communication line, which outputs the transaction information so as to prompt the user to make a payment, and which in turn transmits payment amount information to the payment server via the communication line; a terminal booth which houses the videophone and the bill collector, the terminal booth having a space which permits the user to operate inside. The content provider's device comprises: a videophone which is arranged to be bidirectionally connected to the videophone of the user's device via a telephone line; and a computer having a display unit and an input unit, wherein when the videophone is connected via the line, the computer performs a process in which a location of the user's device is retrieved according to caller's telephone number information and shown on the display unit, a process in which transaction information entered by the input unit is transmitted to the payment server via a communication line, and a process in which payment amount information is received from the payment server via the communication line and shown on the display unit. This system is arranged such that the user inside the terminal booth of the user's device receives a service from the content provider by operating the videophone, and that the user pays for the service by means of the bill collector housed in the terminal booth.

In this invention, it is preferable that the bill collector of the user's device comprises a cash slot and a card reader, and that a method of payment is selectable from by cash or card.

According to the present invention, if an amount to be paid by card is less than a preset amount, authorization is done by the bill collector. If an amount to be paid by card is not less than the preset amount, the bill collector is connected to an external authorization center where authorization is done.

In this invention, if the user wishes to join a member's club organized by the content provider, a membership card may be issued by the bill collector of the user's device. As a result, it is no longer necessary to mail a membership card to the user. From the user's point of view, he/she can make use of the membership card immediately after joining the member's club.

In this invention, the user's device comprising the videophone, the bill collector and the terminal booth is installed in a store, inside ticket barriers of a station (e.g. on the platform), or other locations convenient for users.

Because the present invention equips the user's device with the bill collector, the user can pay for a service without notifying or registering his/her credit card number or the like to a content provider. As a result, a user does not have to go through the trouble of entering a credit card number or the like by manipulating a keyboard, etc., so that the user can easily receive a service from the content provider.

Besides, since a user has a free option of paying by cash or card, a user who is anxious about giving out his/her credit card number may opt for cash payment. Further, in the case of card payment, authorization is done either by the authorization function within the bill collector or by an external authorization center which has no relationship with the content provider. Hence, personal information will not be revealed to the content provider, so that a user can receive a service with a sense of security.

In another respect, since this is a videophone-based dialog-dependent system, those who do not own a PC and those who cannot operate a PC can also receive a service easily.

Further in this invention, the user's device is installed, for example, on the platform inside ticket barriers of a station, rather than in an individual house, a company office, etc. Therefore, the user can receive a service easily on his/her way to work or school, or during a business trip or a vacation, just as he/she drops in at stores that provide those services.

Furthermore, the videophone to be operated by the user is housed in the terminal booth, the inside of which is invisible to outsiders. Therefore, even in a busy station, a user is protected from other people's eyes and can freely choose a service for which protection of privacy is essential (e.g. cosmetic surgery, health/legal consultation, debt to credit companies).

### BRIEF DESCRIPTION OF DRAWINGS

Fig. 1 is a block diagram showing a configuration of an embodiment of the present invention.
Fig. 2 is a perspective view schematically showing a structure of a user's device (a virtual counter).
Fig. 3 shows a typical menu screen displayed on a monitor of a videophone in the user's device.
Fig. 4 is a plan view of a remote controller to be used with the videophone in the user's device.
Fig. 5 is a flowchart showing specific details of processes involved in an embodiment of the present invention.
Fig. 6 is a similar flowchart.
Fig. 7 is a similar flowchart.
Fig. 8 is a table summarizing exchange of information (sent and received) concerning an embodiment of the present invention.

### BEST MODE FOR CARRYING OUT THE INVENTION

An embodiment of the present invention is hereinafter described with reference to the drawings.

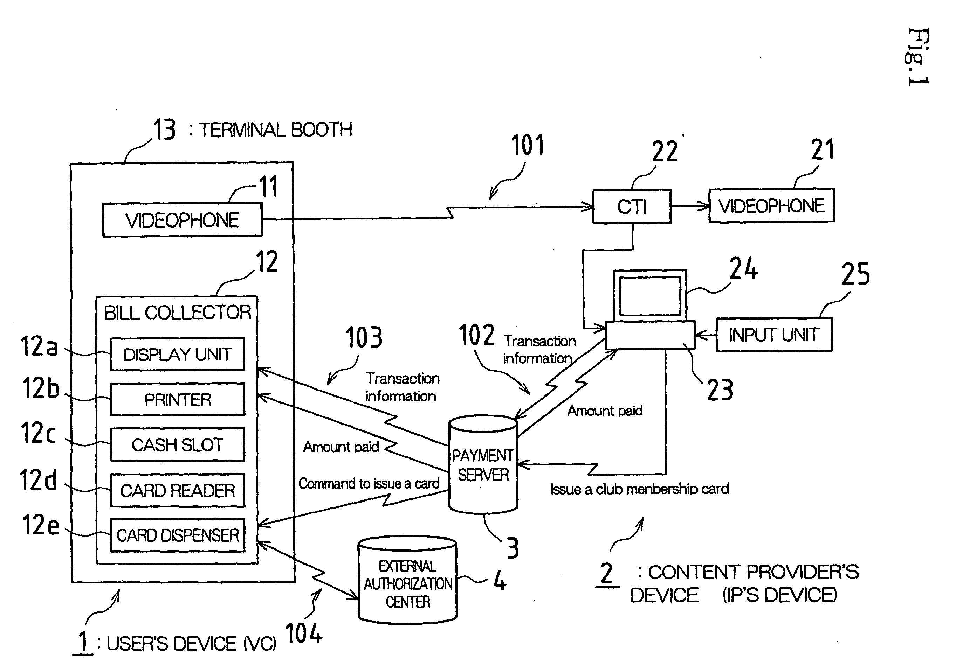

Fig. 1 is a block diagram showing a configuration of a billing system of the present invention.

The billing system of this embodiment is composed of user's devices 1, content provider's devices 2, and a payment server 3.

The user's devices 1 and the content provider's devices 2 are arranged to be bidirectionally connected via telephone lines 101. The user's devices 1 and the payment server 3 are arranged to be bidirectionally connected via ISDN (Integrated Services Digital Network) lines or telephone lines 103. The content provider's devices 2 and the payment server 3 are arranged to be bidirectionally connected via ISDN lines or telephone lines 102.

In this system, the user's devices 1 are installed in JR stations, private railway stations, subway stations, or other like stations, in the station yards of major stations (e.g. on the platform), in stores, or in independent facilities. The content provider's devices 2 are installed respectively at content companies which provide services. The payment server 3 locates at a company which manages the whole system.

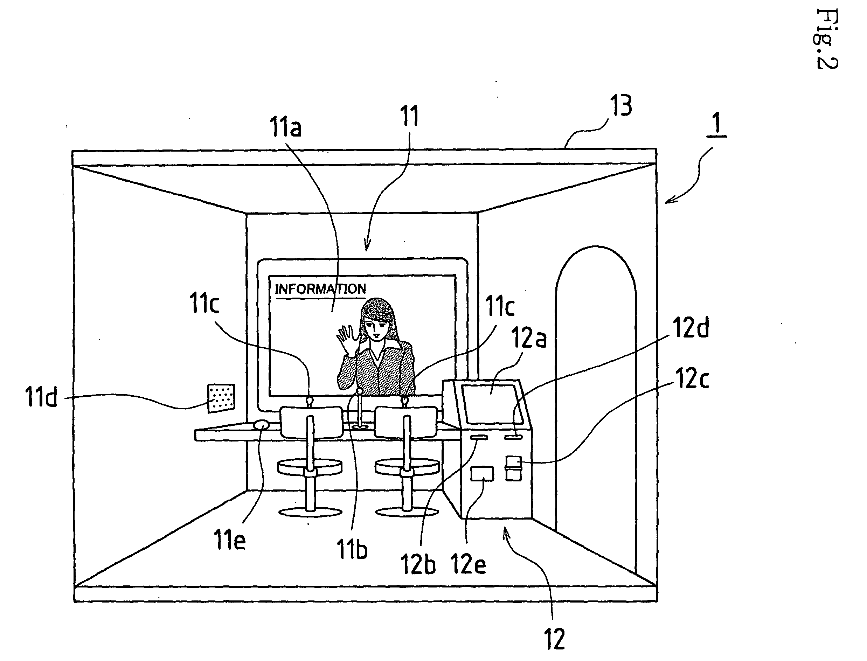

Each user's device 1 is equipped with a videophone 11 and a bill collector 12. As illustrated in Fig. 2, the videophone 11 and the bill collector 12 are housed in a terminal booth 13 which has a space that permits a user to operate inside.

The videophone 11 is equipped with a monitor 11a mounted on a wall surface of the terminal booth 13, a camera 11b which takes an image of a user, microphones 11c, a speaker 11d (depending on the situation, each microphone 11c and the speaker 11d may be an integrated unit or a headset), a remote controller 11e, and the like. As an initial screen, the monitor 11a of the videophone 11 displays a menu screen.

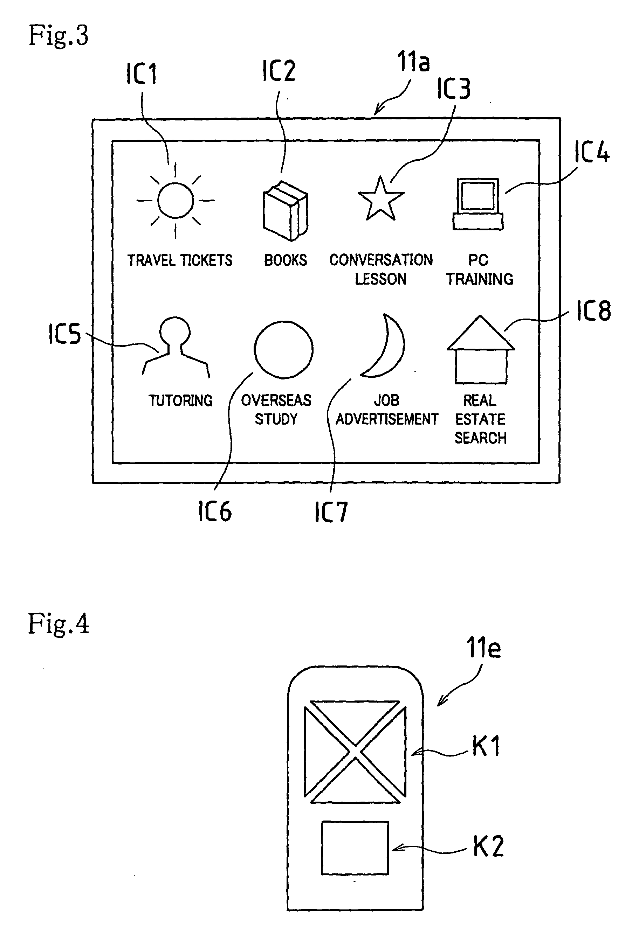

As exemplified in Fig. 3, the menu screen presents icons IC1-IC8 which enable a user to choose any of the contents provided by a plurality of content providers.

In this embodiment, contents offered by the content providers include purchase of travel tickets, purchase of books, foreign language conversation lesson (in six languages), PC training, tutoring, counseling for overseas study, job advertisement search, and real estate search.

Although the display example in Fig. 3 presents eight icons IC1-IC8, this should be understood as a non-limitative example. In fact, the number of icons may be more or less than eight and can be decided at will.

The icons IC1-IC8 presented on the initial screen can be chosen by manipulation of the remote controller 11e.

In detail, the remote controller 11e has cursor keys K1 for pointing from one icon to another, and an enter key K2 for finalizing the icon choice. To choose a content, a user manipulates the cursor keys K1 to point an icon of his/her interest (e.g. the travel ticket purchase icon IC1) and, with that icon pointed, operates the enter key K2. According to the default setting, the icons IC1-IC8 are presented on the menu screen in a matrix arrangement, with the icon at the top left corner IC1 being pointed.

The bill collector 12 is equipped with a display unit 12a which shows various information (including transaction information and payment amount information) sent from the payment server 3 via the ISDN line or the telephone line 103, a printer 12b for printing a receipt, service information and the like, a cash slot 12c, a card reader 12d for reading a credit card or a debit card, and a card dispenser 12e for issuing a membership card of a member's club.

The cash slot 12c adopts a structure similar to an automatic teller machine installed at a bank, etc.

The card dispenser 12e issues a membership card for a user who wishes to join a member's club, in response to an instruction from the payment server 3 to issue a card.

The bill collector 12 as above is arranged to be bidirectionally connected to an external authorization center 4 via an ISDN line or a telephone line 104. In addition, the bill collector 12 has an internal authorization function in itself. If the amount to be paid by credit card is below a predetermined amount (e.g. less than 30,000 yen), authorization is done by the internal authorization function. On the other hand, if the amount to be paid by credit card is 30,000 yen or higher, authorization is done by the external authorization center 4.

Regarding the videophone 11 of the user's device 1 as described above, a user manipulates the remote controller in order to point an icon and to finalize the choice. As an alternative, the monitor of the videophone may be a touch panel-type display which presents similar icons. In this case, a user touches one of the icons with a finger in order to choose a content.

Each content provider's device 2 is composed of a videophone 21 which is arranged to be bidirectionally connected to the videophone 11 of the user's device 1 via the telephone line 101, a CTI (computer telephony integration) 22, and a PC 23.

Although not illustrated, the videophone 21 has a camera which takes an image of an operator (content provider staff), a monitor for image display, a microphone, a speaker, etc. The videophone 21 of the content provider's device 2 is similar to the one used in general.

When the videophone 21 receives a telephone call from one of the user's devices 1, the CTI 22 supplies the PC 23 with caller's telephone number information about the user's device 1.

The PC 23 has a display unit 24 and an input unit 25. The input unit 25 is a keyboard, a mouse, or the like. With operator's manipulation, the input unit 25 can enter various information including transaction information such as item detail, payment method, amount to be paid. Depending on the requirement, the transaction information may also contain customer information such as customer's name, address, telephone number, and more.

Based on the caller's telephone number information supplied from the CTI 22, the PC 23 retrieves location information of the user's device 1 from which the call originated, and presents the location information on the screen of the display unit 24. Further at the PC 23, the transaction information entered by the input unit 25 is transmitted to the payment server 3, and the payment amount information sent from the payment server 3 is shown on the screen of the display unit 24.

Additionally, when the PC 23 receives information that a user wishes to join a member's club organized by the content provider, the PC 23 sends the user's customer information (name, address, telephone number) to the payment server 3.

The payment server 3 has a database (not shown) for recording customer information (customer's name, address, telephone number), transaction information (item detail, payment method, amount to be paid, etc. ) , club membership information, and other various information.

When the payment server 3 receives the transaction information from the PC 23 of the content provider's device 2, the payment server 3 records the transaction information in the database, and in turn transmits the transaction information to the bill collector 12 of the user's device 1. Likewise, when the payment server 3 receives the payment amount information from the bill collector 12 of the user's device 1, the payment server 3 records the payment amount information in the database, and in turn transmits the payment amount information to the PC 23 of the content provider's device 2.

Further, when information related to issuance of the club membership card is transmitted from the PC 23 of the content provider's device 2, the payment server 3 enters and registers a new member's (user's) customer information (name, address, telephone number, etc.) into the database, and in turn sends a command to issue a card to the bill collector 12 of the user's device 1.

In the above embodiment, the videophone 11 and the bill collector 12 of each user's device 1 are housed in the terminal booth 13 which permits a user to operate inside. From outside the terminal booth 13, it is impossible to see what service a user is going to receive by manipulating the videophone 11. Therefore, a user is protected from other people's eyes and can freely choose a content (a service) of his/her interest.

In addition, the user's device 1 composed of the videophone 11, the bill collector 12 and the terminal booth 13 (hereinafter mentioned as VC or virtual counter) is installed at a convenient location, such as inside ticket barriers of a station (e.g. on the platform).

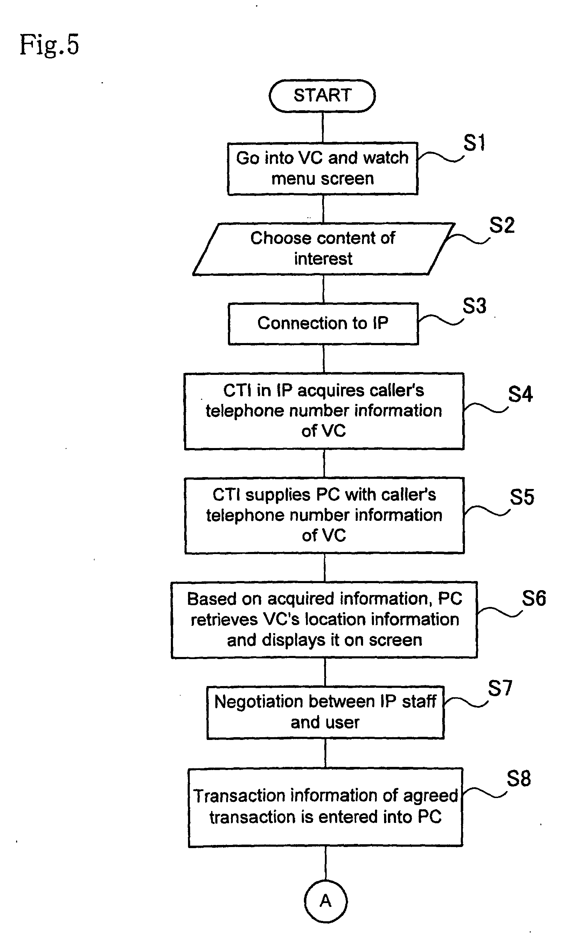

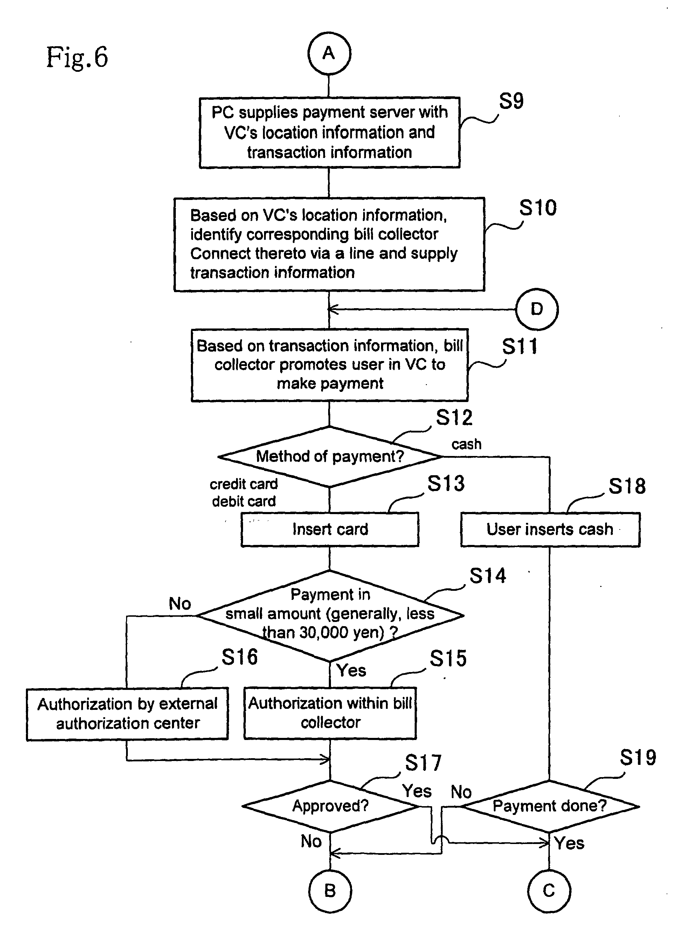

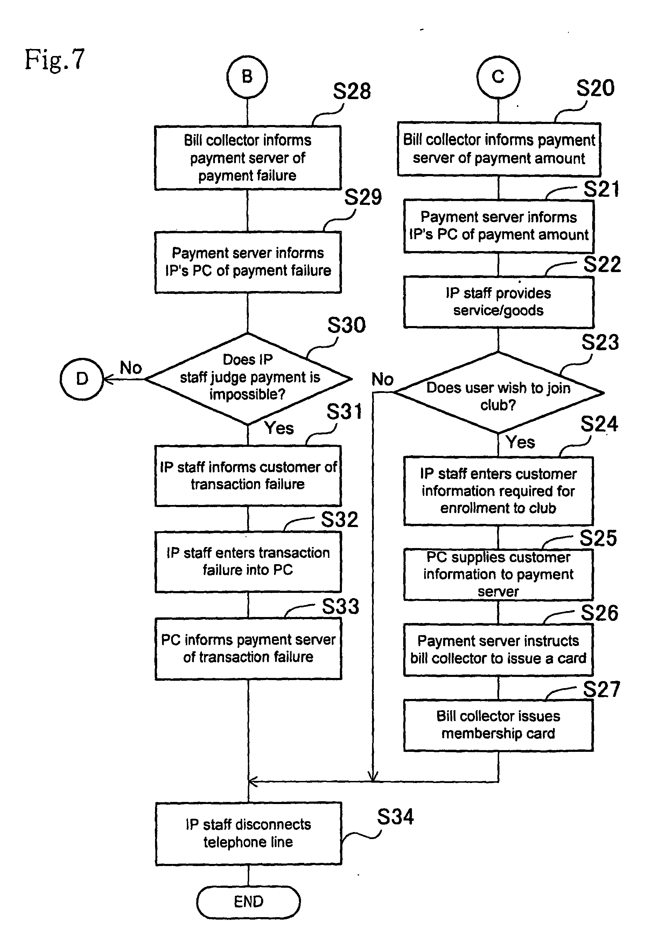

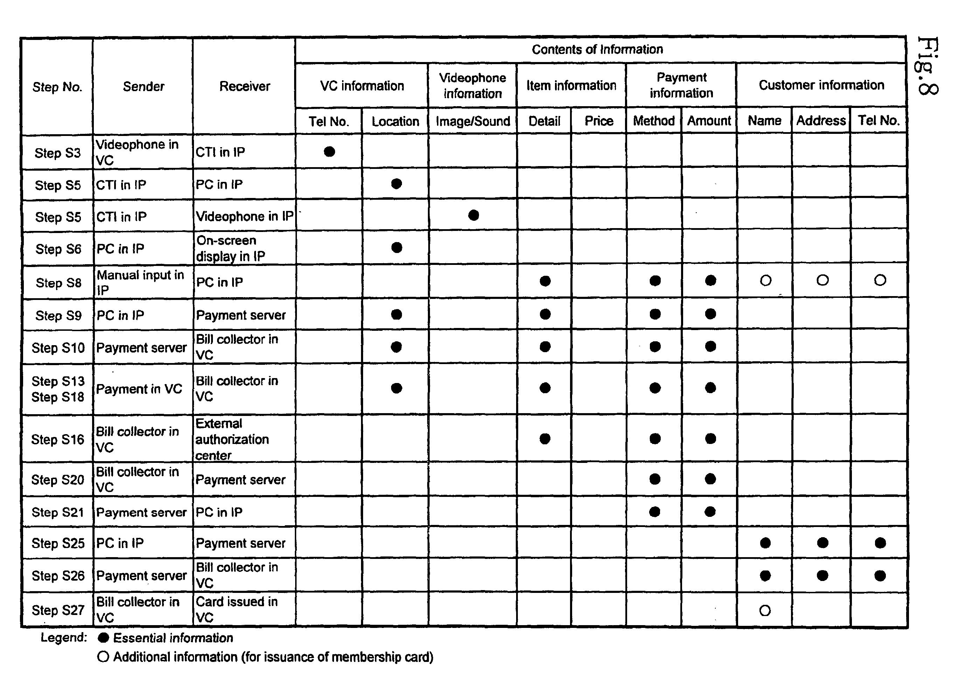

Next, typical processes involved in this embodiment are described, referring to the flowcharts of Fig. 5 to Fig. 7 and the information exchange (sent/received) table of Fig. 8.

In the following description of the flowcharts, the content provider is called IP or Information Provider, and the content provider's device 2 is called IP's device.

Step S1: A user walks into a VC (a terminal booth 13) and watches the menu screen displayed on the monitor 11a of the videophone 11.

Step S2: Among a plurality of icons IC1-IC8 presented on the menu screen (Fig. 3), the user chooses an icon of his/her interest. By way of example, it is presumed that the user chooses the travel ticket purchase icon IC1.

Step S3: Once the icon IC1 presented on the menu screen is chosen (pointed and finalized), connection is established via a line to the IP's device (a travel agent) which provides the chosen content.

Step S4: The CTI 22 of the IP's device acquires caller's telephone number information of the VC.

Step S5: The CTI 22 of the IP's device supplies the caller's telephone number information to the PC 23.

Step S6: Based on the acquired location information (the caller's telephone number information), the PC 23 retrieves location information of the VC and shows the retrieved information on the screen of the display unit 24.

Step S7: By means of the videophone 11 of the VC and the videophone 21 of the IP's device which are bidirectionally connected via the telephone line, the user and staff (IP staff) at the content company (the travel agent) negotiate travel itinerary, transport, accommodations, and others.

Step S8: When an agreement is reached, the IP staff enters the agreed transaction information (ITEM DETAIL: travel ticket, PAYMENT METHOD: cash OR credit card, AMOUNT TO BE PAID, etc.) into the PC 23. If necessary, customer information (user's name, address, telephone number, etc.) is also entered into the PC 23.

Step S9: The PC 23 supplies the VC location information and the transaction information to the payment server 3.

Step S10: Based on the VC location information from the PC 23, the payment server 3 identifies a corresponding bill collector 12 from a plurality of VCs installed in stations or the like. Then, the payment server 3 connects via a line (an ISDN line or a telephone line 103) to the identified bill collector 12, and supplies the transaction information thereto.

Step S11: Based on the transaction information from the payment server 3, the bill collector 12 prompts, on screen, the user (the client) in the VC (the terminal booth 13) to make a payment.

Step S12: Also based on the transaction information from the payment server 3, the bill collector 12 identifies the method of payment. For card payment (by credit card or debit card), refer to Step S13. For cash payment, refer to Step S18.

Step S13: In the case of card payment, the user inserts a credit card or a debit card into the card reader 12d of the bill collector 12.

Step S14: The bill collector 12 judges whether the amount to be paid is small (e.g. less than 30,000 yen) or not. For a small amount of payment, authorization is done by the authorization function within the bill collector 12 (Step S15). Otherwise (e.g. 30,000 yen or higher), authorization is done by the external authorization center 4.

Step S17: If authorization is approved within the bill collector 12 or by the external authorization center 4, the process goes to Step S20. If authorization is denied, the process proceeds to Step S28.

In the case of cash payment, the user inserts a required amount of cash into the cash slot 12c of the bill collector 12 (Step S18).

Step S19: The bill collector 12 counts the cash inserted by the user. If the inserted amount meets the amount to be paid, the process continues to Step S20. If not, the process goes to Step S28.

Step S20: The bill collector 12 notifies the payment server 3 of payment amount information.

Step S21: The payment amount information is transmitted from the payment server 3 to the PC 23 of the IP's device.

Step S22: The IP staff provides services or goods to the user inside the VC. Specifically speaking, by means of the videophones 11, 21 which are connected via a line, the user is given an audio/visual explanation of an overseas travel, a domestic travel or the like. Alternatively, using the videophones 11, 21, a user is provided with audio/visual counseling on matters related to overseas study or the like, or with an English conversation lesson or tutoring. Further, job advertisement search, real estate search or the like can be offered as well.

On the other hand, if the item detail is goods such as a travel ticket, the IP staff dispatches the item to the user through a distribution system. By way of example, an item may be sent to the user's house by mail or home delivery service. Otherwise, the user may designate a store and a time to and by which an item (goods) should be delivered. In this case, the item may be addressed to a store which locates at a VC-installed station or the like, or addressed to a store (such as a convenient store) which locates at a station near the user's house.

Incidentally, if the user who receives a service/goods in the above manner is a member of a club (organized by the IP) , the IP staff enters a "read card" command into the PC 23. This command is sent from the PC 23 via the payment server 3 to the bill collector 12 of the VC. On receiving the command, the bill collector 12 prompts the user in the VC to "insert membership card". Once the membership card is inserted, contents recorded on the membership card are transferred from the bill collector 12 via the payment server 3 to the PC 23 of the IP's device. Then, the member may be rewarded with a member's privilege such as a service point.

Step S23: After provision of a service/goods is complete, the IP staff asks if the user would like to join the member's club. If the user wishes to join the club, the process continues to Step S24. If not, the process skips to Step S34, where the IP staff disconnects the telephone line to end the session. After the telephone line is disconnected, the monitor 11a of the VC's videophone 11 displays the initial menu screen again (Fig. 3).

Step S24: By means of the videophones 11, 21 which are connected via a line, the IP staff inquires customer information of the user (name, address, telephone number, etc.) which is required for enrollment to the club. The customer information is entered in the PC 23.

Step S25: The customer information and a command to issue a membership card are supplied from the PC 23 to the payment server 3.

Step S26: The payment server 3 instructs the bill collector 12 of the VC to issue a card.

Step S27: After the bill collector 12 has issued a membership card, the process goes to Step S34, where the IP staff disconnects the telephone line to end the session.

The next description concerns the case where authorization is denied in Step S17, or where the inserted amount does not meet the amount to be paid in Step S19. In this case, the bill collector 12 reports a payment failure to the payment server 3 (Step S28).

Step S29: The payment server 3 reports the payment failure to the PC 23 of the IP's device. The payment failure is shown on the display unit 23.

Step S30: The IP staff judges whether the amount is payable or not. If payable, the process returns to Step S11 and prompts the user in the VC to insert money. If not, the process goes to Step S31.

Step S31: By means of the videophones 11, 21 which are connected by a line, the IP staff informs the user in the VC that the transaction has failed.

Step S32: The IP staff enters the transaction failure in the PC 23.

Step S33: After the PC 23 reports the transaction failure to the payment server 3, the process proceeds to Step S34, where the IP staff disconnects the telephone line to end the session.

The above embodiment gives a free option of paying by cash or card. Hence, a user who is anxious about giving out his/her credit card number may opt for cash payment.

In this regard, the system for card payment is similar to the one currently adopted by department stores, specialty stores and other stores. Namely, a credit card or the like is read by the card reader 12d of the bill collector 12, and authorization is done by the external authorization center 4 (or by the internal authorization function). Since the credit card number or other ID is not revealed to the content provider, the user can get a service with a sense of security.

Furthermore, through a videophone-based dialog with content provider staff, a user can receive such services as purchase of travel tickets, books and other items, counseling for overseas study, English conversation lesson, tutoring, job advertisement search, and real estate search. Consequently, even PC-illiterates who were unable to access these contents can now receive those services easily.

In addition to a dialog-dependent transaction, this system also adopts a pre-payment method in which a service is provided after the bill collector 12 collects the charge (by cash or card). Unlike some Internet transactions which send an expensive bill at a later date, a user can use the system with a sense of security.

In the above embodiment, the user's device (VC) is installed at a convenient location such as on the platform inside ticket barriers of a station. Hence, a user can take a lesson of English conversation or the like at a station while he/she is going from one place to another. Further, in a conventional environment, a user who goes to a lesson has to exit a station through a ticket barrier and to go all the way to a classroom. However, if, for example, the VC is installed inside ticket barriers, a user can attend a lesson without passing a ticket barrier. Thus, the user can save the commuting time from the station to the classroom, and can take a lesson efficiently.

The services applicable to the billing system of this invention may include: guide services (e.g. road guide); medical services (e.g. hospital guide, guide for commercially available medicines); consultation services (e.g. legal consultation, administrative consultation); counseling services (e.g. mental and psychological counseling, counseling for occupation-related psychosomatic diseases, counseling for juvenile problems such as withdrawal and school rejection); assistance services for foreigners staying in Japan; job placement services for disabled persons; services to offer the user's device (VC) as an interview venue for an employer and a job seeker, and other various services.

### INDUSTRIAL APPLICABILITY

The system of the present invention provides services by a videophone-based method which depends on a dialog (with an image). In particular, the system is effective for services which are difficult to handle through Internet web sites and the like (e.g. counseling services, job placement services for the disabled). This system is advantageous in that these and other various types of services can be provided easily and securely.

## Claims

1. A billing system to charge for a service when a user receives a service which is chosen from contents provided by at least one content provider,
wherein the billing system comprises at least one user's device, at least one content provider's device, and a payment server,
the user's device comprising: a videophone whose screen presents icons for choosing one of the contents; a bill collector which receives transaction information transmitted from the payment server via a communication line, which outputs the transaction information so as to prompt the user to make a payment, and which in turn transmits payment amount information to the payment server via the communication line; a terminal booth which houses the videophone and the bill collector, the terminal booth having a space which permits the user to operate inside,
the content provider's device comprising: a videophone which is arranged to be bidirectionally connected to the videophone of the user's device via a telephone line; and a computer having a display unit and an input unit, wherein when the videophone is connected via the line, the computer performs a process in which a location of the user's device is retrieved according to caller's telephone number information and shown on the display unit, a process in which transaction information entered by the input unit is transmitted to the payment server via a communication line, and a process in which payment amount information is received from the payment server via the communication line and shown on the display unit,
wherein the system is arranged such that the user inside the terminal booth of the user's device receives a service from the content provider by operating the videophone, and and that the user pays for the service by means of the bill collector housed in the terminal booth.

2. A billing system according to claim 1, wherein the bill collector of the user's device comprises a cash slot and a card reader, and a method of payment is selectable from by cash or card.

3. A billing system according to claim 1 or 2, wherein
if an amount to be paid by card is less than a preset amount, authorization is done by the bill collector of the user's device, and
if an amount to be paid by card is not less than the preset amount, the bill collector is connected to an external authorization center where authorization is done.

4. A billing system according to any of claims 1 to 3, wherein if the user wishes to join a member's club organized by the content provider, a membership card is issued by the bill collector of the user's device.

5. A billing system according to any of claims 1 to 4, wherein the user's device comprising the videophone, the bill collector and the terminal booth is installed in a store or in independent facilities.
